# EUROPEAN PATENT APPLICATION

(11) **EP 4 793 063 A1**
(43) Date of publication of application: **19.08.2026**
(21) Application number: 24893984.5
(22) Date of filing: 05.11.2024
(51) Int. Cl.: B60C 1/00, B60C 19/00, C08K 3/04, C08L 7/00, C08L 23/22

(54) **TIRE WITH FUNCTIONAL COMPONENT**

(30) Priority: 20.11.2023 JP 2023196858
(71) Applicant: The Yokohama Rubber Co., Ltd., Hiratsuka-shi, Kanagawa 254-8601 (JP)
(72) Inventor: GOHARA, Sakurako, Hiratsuka-shi, Kanagawa 254-8601 (JP); FUJIMORI, Hiroaki, Hiratsuka-shi, Kanagawa 254-8601 (JP); IIZUKA, Yusuke, Hiratsuka-shi, Kanagawa 254-8601 (JP); OZAKI, Makoto, Hiratsuka-shi, Kanagawa 254-8601 (JP)
(74) Representative: Dilg, Haeusler, Schindelmann Patentanwaltsgesellschaft mbH
(86) International application number: PCT/JP2024/039275
(87) International publication number: WO 2025/109992

(57) **Abstract**

Provided is a tire that includes a housing body provided on a tire inner surface of a tread portion and housing a functional component and has excellent sensing intensity of a sensor function of the functional component and excellent durability of the housing body. The tire includes a housing body provided on a tire inner surface of a tread portion and housing a functional component. The functional component has at least a contact surface that contacts the tire inner surface and a sensor function of detecting tire information. The housing body is composed of a rubber component. The rubber component contains 60 mass% or more of butyl rubber (IIR), has a content ratio of natural rubber (NR) of 40 mass% or less, and further contains 40 to 82 parts by mass of carbon black per 100 parts by mass of the rubber component. This configuration enables the tire to achieve the above-described purpose.

## Description

### Technical Field

The present invention relates to a tire including a functional component having a sensor function for detecting tire information on a tire inner surface.

### Background Art

To detect tire information, a functional component having a sensor function (for example, an electronic component such as a sensor unit) is disposed on a tire. In particular, from the viewpoint of easiness of air pressure detection and abrasion detection, the functional component as described above is disposed on a tire inner surface of a tread portion (for example, Patent Documents 1 to 2).

### Citation List

### Patent Literature

Patent Document 1: WO 2022/123854
Patent Document 2: WO 2022/181267

### Summary of Invention

### Technical Problem

Here, a housing body that is disposed on the tire inner surface of the tread portion and houses the functional component is subjected to forces due to rotation of the tire, impacts from a road surface, and the like during travel and thus has a problem in terms of durability. Patent Documents 1 and 2 disclose a tire in which electronic component attachment member (housing body) and the like are less likely to be peeled off from a tire surface even when a large impact is applied during high-speed traveling or high-speed traveling in a lowtemperature environment. These tires have room for improvement because rubber physical properties of members constituting the tire and an attachment position of the electronic component attachment member (housing body) are limited. In this functional component, sensing intensity of a sensor function is less likely to increase due to an influence of the rotation of the tire or the like during travel, and there is still room for further improvement in this respect.

Thus, an object of the present invention is to provide a tire that includes a housing body provided on a tire inner surface of a tread portion and housing a functional component and has excellent sensing intensity of a sensor function of the functional component and excellent durability of the housing body.

### Solution to Problem

To achieve the above-described purpose, the present inventor has extensively conducted studies, found the following tire, and completed the present invention. The tire includes a housing body provided on a tire inner surface of a tread portion and housing a functional component. The functional component has at least a contact surface that contacts the tire inner surface and a sensor function of detecting tire information. The housing body is composed of a rubber component. The rubber component contains 60 mass% or more of butyl rubber (IIR), has a content ratio of natural rubber (NR) of 40 mass% or less, and further contains 40 to 82 parts by mass of carbon black per 100 parts by mass of the rubber component. The tire has excellent sensing intensity of the sensor function of the functional component and excellent durability of the housing body.

That is, the present invention includes the following embodiments <1> to <11>.
<1> A tire including a housing body provided on a tire inner surface of a tread portion and housing a functional component,
   the functional component having at least a contact surface that contacts the tire inner surface and a sensor function of detecting tire information,
   the housing body being composed of a rubber component,
   the rubber component containing 60 mass% or more of butyl rubber (IIR), preferably more than 60 mass%, more preferably 65 mass% or more, still more preferably 70 mass% or more, having a content ratio of 40 mass% or less of natural rubber (NR), preferably less than 40 mass%, more preferably 35 mass% or less, still more preferably 30 mass% or less, and further containing 40 to 82 parts by mass of carbon black, preferably 45 to 80 parts by mass, per 100 parts by mass of the rubber component.
<2> The tire according to <1>, wherein the housing body contains a total of 40 to 85 parts by mass of the carbon black and a white filler, preferably 45 to 80 parts by mass, per 100 parts by mass of the rubber component.
<3> The tire according to <2>, wherein the white filler is one or more (at least one) selected from the group consisting of silica, talc, mica, clay, and calcium carbonate.
<4> The tire according to <2> or <3>, wherein 3 to 40 parts by mass of the white filler is contained, preferably 10 to 30 parts by mass, per 100 parts by mass of the rubber component.
<5> The tire according to any one of <1> to <4>, wherein the rubber component contains both a butyl rubber and a natural rubber, and a ratio of the butyl rubber to the natural rubber in the rubber component is 1.5 times or more (IIR/NR is 1.5 or more), preferably 2 times or more.
<6> The tire according to any one of <1> to <5>, wherein an average value of a nitrogen adsorption specific surface area (N₂SA) of the carbon black is 50 m²/g or less, preferably 10 m²/g or more and 45 m²/g or less.
<7> The tire according to any one of <1> to <6>, wherein a tensile stress at 100% elongation (M100) of the housing body at 100°C is 5.0 MPa or less, preferably 1.0 MPa or more and 4.5 MPa or less, more preferably 1.0 MPa or more and 4.0 MPa or less, still more preferably 1.0 MPa or more and 3.5 MPa or less, and still more preferably 1.0 MPa or more and 3.0 MPa or less.
<8> The tire according to any one of <1> to <7>, wherein the housing body is fixed to the tire inner surface.
<9> The tire according to <8>, wherein the housing body is fixed to the tire inner surface with an adhesive.
<10> The tire according to any one of <1> to <9>, wherein the sensor function of the functional component is a sensor function using a piezoelectric element as a sensor element.
<11> The tire according to <10>, wherein the piezoelectric element is disposed on the contact surface that contacts the tire inner surface of the functional component.

### Advantageous Effects of Invention

An embodiment of the present invention can achieve a tire that includes a housing body provided on a tire inner surface of a tread portion and housing a functional component and has excellent sensing intensity of a sensor function of the functional component and excellent durability of the housing body.

### Brief Description of Drawings

FIG. 1 is a meridian cross-sectional view illustrating an embodiment of a tire according to an embodiment of the present invention.
FIG. 2 is a cross-sectional view illustrating an embodiment of a housing body provided on a tire inner surface of a tread portion of the tire according to an embodiment of the present invention and a functional component housed in the housing body.
FIG. 3 is a perspective view illustrating the embodiment of the housing body provided on the tire inner surface of the tread portion of the tire according to an embodiment of the present invention and the functional component housed in the housing body.

### Description of Embodiments

Embodiments of the present invention will be described below.

An embodiment of the present invention is a tire including a housing body provided on a tire inner surface of a tread portion and housing a functional component. The functional component has at least a contact surface that contacts the tire inner surface and a sensor function of detecting tire information. The housing body is composed of a rubber component. The rubber component contains 60 mass% or more of butyl rubber (IIR), has a content ratio of natural rubber (NR) of 40 mass% or less, and further contains 40 to 82 parts by mass of carbon black per 100 parts by mass of the rubber component. Hereinafter, this is also referred to as the "tire of the present invention".

Note that in the present invention, unless otherwise specified, value ranges indicated using "from ... to ..." or "of ... to ..." mean value ranges in which the value before "to" is a lower limit and the value after "to" is an upper limit.

Hereinafter, the configuration of the housing body provided in the tire of the present invention, the contained components, the contents thereof, the configuration of the tire (the entire tire) of the present invention, and the like will be described in detail with reference to the drawings. The dimensional ratios (length, thickness, and the like), orientations, and the like of the members and the like shown in the drawings may differ from the actual dimensional ratios and orientations and the like in order to facilitate understanding of the invention. Reference signs and the like may be partially omitted.

### Housing Body

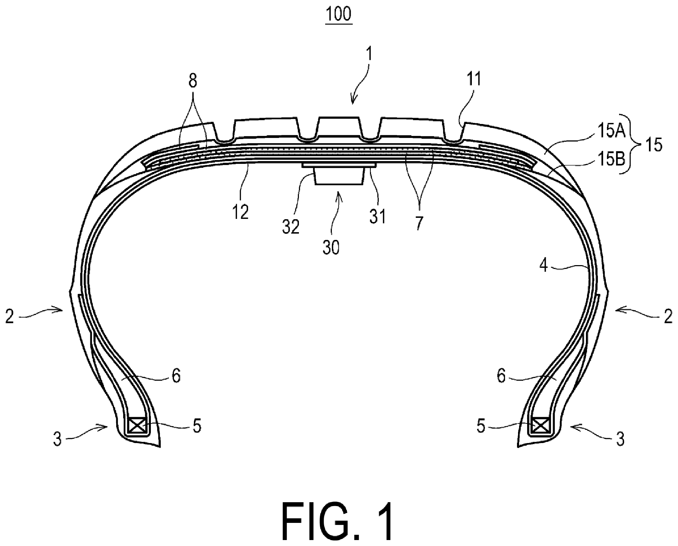

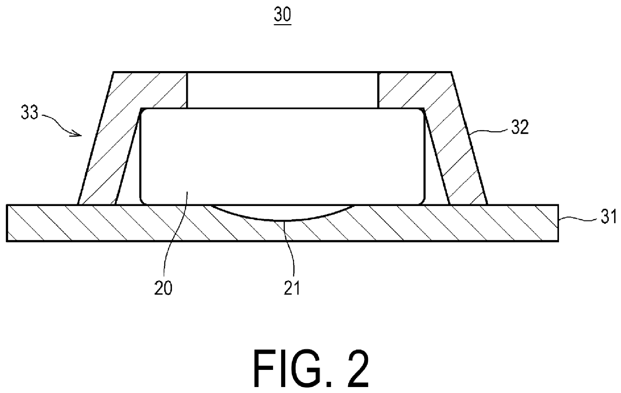

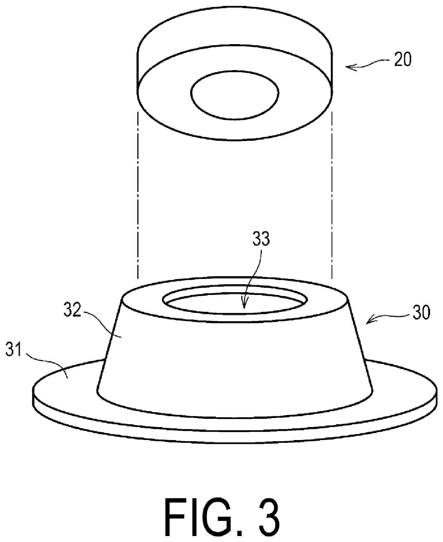

The housing body provided in the tire of the present invention includes a predetermined rubber component. The housing body is provided on the tire inner surface of the tread portion and houses the functional component having the sensor function for detecting the tire information so as to have the contact surface that contacts the tire inner surface. For example, as shown in FIGS. 1 to 3, an embodiment is shown in which a base portion 31 of a housing body 30 is bonded and fixed to a tire inner surface 12 of a tread portion 1 (the tire inner surface 12 bonded to the base portion 31 is omitted in FIGS. 2 and 3), a housing portion 33 houses a functional component 20 so as to be surrounded by a side wall 32, and the housed functional component 20 has a contact surface 21 that contacts the tire inner surface 12 of the tread portion 1 via the base portion 31.

Here, the expression that the housing body is "provided on the tire inner surface of the tread portion" means that the housing body is disposed to be connected to the tire inner surface of the tread portion (surface on an inner peripheral side of the tire at a position facing a tread surface of the tread portion). The expression that the functional component "has the contact surface that is in contact with the tire inner surface (of the tread portion)" includes not only an embodiment in which the functional component has a contact surface that is in direct contact with the tire inner surface of the tread portion, but also an embodiment in which the functional component has a contact surface that is in contact with the tire inner surface via a member (the base portion 31 in the embodiment in FIG. 1) that is in surface contact with the tire inner surface of the tread portion in the housing body. That is, an embodiment in which the functional component is in direct surface contact with the tire inner surface of the tread portion and an embodiment in which the functional component is in surface contact with the tire inner surface via the member that is in surface contact with the tire inner surface of the tread portion in the housing body are included.

It is more preferable that the housing body in which the functional component is housed is fixed to the tire inner surface of the tread portion (the position of the housing body does not substantially change), and it is more preferable that the housing body is fixed to the tire inner surface of the tread portion with an adhesive.

As the adhesive, an epoxy adhesive, an acrylic adhesive, or the like can be used. Alternatively, a double-sided tape or the like may be used as the adhesive.

Hereinafter, details of each component contained in the housing body, physical properties of the housing body, and the like will be described.

### Rubber Component

The housing body provided in the tire of the present invention includes a rubber component containing 60 mass% or more of butyl rubber (IIR) and having a content ratio of natural rubber (NR) of 40 mass% or less. That is, the housing body includes the rubber component, and the rubber component contains 60 mass% or more of butyl rubber (IIR) and has a content ratio of natural rubber (NR) of 40 mass% or less. The rubber component is not particularly limited as long as it contains the butyl rubber (IIR) in a content ratio of 60 mass% or more, and the content ratio of the natural rubber (NR) is 40 mass% or less, and any known rubber component used in applications included in rubber products and the like, such as diene rubber and so-called non-diene rubber, can be used (used in combination). Examples of the diene rubber include, in addition to the natural rubber (NR) described above, butadiene rubber (BR), styrene-butadiene copolymer rubber (styrene butadiene rubber, SBR), acrylonitrile-butadiene copolymer rubber (nitrile rubber, NBR), chloroprene rubber (CR), synthetic isoprene rubber (IR), styrene-isoprene copolymer rubber, isoprene-butadiene copolymer rubber, and styrene-butadiene-vinylpyridine terpolymer (VP).

Moreover, in addition to the butyl rubber (IIR) described above, it is also possible to combine rubber components other than diene rubber, such as olefin rubber (ethylene propylene rubber, acrylic rubber, and the like), fluororubber, and silicone rubber. As the butyl rubber (IIR), a regenerated butyl rubber obtained by recycling used rubber products and the like can also be used.

The content ratio of the butyl rubber (IIR) in the rubber component included in the housing body provided in the tire of the present invention is more preferably more than 60 mass%, still more preferably 65 mass% or more, still more preferably 70 mass% or more, still more preferably 80 mass% or more, and still more preferably 90 mass% or more. The upper limit may be 100 mass% and is more preferably 95 mass% or less. When the regenerated butyl rubber is contained, the content ratio of the butyl rubber (IIR) in the present invention is the content ratio of the entire butyl rubber including the regenerated butyl rubber (the same applies hereinafter).

The content ratio of the natural rubber (NR) in the rubber component included in the housing body provided in the tire of the present invention is more preferably less than 40 mass%, still more preferably 35 mass% or less, still more preferably 30 mass% or less, and may be 20 mass% or less or 10 mass% or less since the effect of the present invention is more easily exhibited. The lower limit may be 0 mass% (an embodiment in which the natural rubber is substantially not contained), and is more preferably 1 mass% or more, and still more preferably 5 mass% or more.

In addition, when the rubber component included in the housing body contains both of natural rubber (NR) and butyl rubber (IIR), the effect of the present invention is more easily exhibited; therefore, the ratio of the butyl rubber (IIR) to the natural rubber (NR) in the rubber component is more preferably 1.5 times or more (IIR/NR is 1.5 or more), still more preferably 2 times or more (IIR/NR is 2.0 or more), even more preferably 2.5 times or more (IIR/NR is 2.5 or more), further more preferably 3 times or more (IIR/NR is 3.0 or more), and still further more preferably 5 times or more (IIR/NR is 5.0 or more). The upper limit is not particularly limited, and may be, for example, 50 times or less (IIR/NR may be 50 or less).

### Carbon Black

The housing body provided in the tire of the present invention contains carbon black in addition to the above-described predetermined rubber component as a constituent component. The carbon black is not particularly limited, and any known carbon black used in applications such as rubber products can be used. Specific examples of carbon black that can be used include various grades such as SAF-HS, SAF, ISAF-HS, ISAF, ISAF-LS, IISAF-HS, HAF-HS, HAF, HAF-LS, FEF, GPF, SRF, FT, and MT. A regenerated carbon black obtained by recycling used rubber products and the like can also be used. The carbon black may be used alone or in combination of two or more types.

An average value of a nitrogen adsorption specific surface area (N₂SA) of the carbon black is more preferably 50 m²/g or less, still more preferably 45 m²/g or less, and still more preferably 40 m²/g or less from the viewpoint of easily improving durability of the housing body, and the like. That is, the larger the particle diameter of the carbon black, the more suitable. The lower limit is more preferably 10 m²/g or more, still more preferably 15 m²/g or more, and still more preferably 23 m²/g or more from the viewpoint of easily suppressing falling off of the functional component.

Here, the "carbon black" means carbon fine particles including primary particles having a diameter of about from 3 to 500 nm produced by industrial quality control. The nitrogen adsorption specific surface area (N₂SA) of the carbon black is a value measured according to JIS K6217-2:2017.

In addition, the "average value of the nitrogen adsorption specific surface area (N₂SA) of the carbon black" is a value of the nitrogen adsorption specific surface area (N₂SA) of the carbon black when one kind is used alone, and is a value obtained by multiplying the value of the nitrogen adsorption specific surface area (N₂SA) of each of the carbon blacks used in combination by the use ratio thereof and adding them together when two or more kinds are used in combination. At the time of this calculation, a total of the use ratios of the respective carbon blacks is set to 1.0.

In this housing body, from 40 to 82 parts by mass of the carbon black as described above is contained per 100 parts by mass of the rubber component included in the housing body. In addition, the content of carbon black is more preferably 42 parts by mass or more, still more preferably 45 parts by mass or more per 100 parts by mass of the rubber component described above. The upper limit is more preferably 80 parts by mass or less, still more preferably 75 parts by mass or less, still more preferably 70 parts by mass or less, still more preferably 65 parts by mass or less, still more preferably 60 parts by mass or less, and still more preferably 55 parts by mass or less per 100 parts by mass of the rubber component described above. When the amount of carbon black is less than 40 parts by mass or more than 82 parts by mass per 100 parts by mass of the rubber component described above, the effect of the present invention may not be obtained. In addition, when the amount of the carbon black is more than 82 parts by mass per 100 parts by mass of the rubber component described above, there is a possibility that the insertability of the functional component into the housing body is deteriorated.

Here, the content of carbon black in the present invention means the total content of all carbon blacks when a plurality of carbon blacks are included, including the regenerated carbon black. The same applies to the following.

### White Filler

The housing body provided in the tire of the present invention preferably further contains a white filler. The white filler is also not particularly limited, and any known white filler used for applications such as rubber products can be used. Specific examples of the white filler include silica, talc, mica, clay, and calcium carbonate, and as the silica, for example, wet silica, dry silica, fumed silica, diatomaceous earth, and the like can be used. Silica produced using a biomass material such as rice husks as a raw material may be used. As the calcium carbonate, it is more preferable to use heavy calcium carbonate. The white filler may be used alone or in combination of two or more types.

Here, the "silica" means a particulate substance composed of silicon dioxide (SiO₂) or containing silicon dioxide as a main component (containing, for example, 80 mass% or more, further 90 mass% or more).

When the housing body contains the white filler, it is preferable that a total of 40 to 85 parts by mass of the carbon black described above and the white filler are contained per 100 parts by mass of the rubber component included in the housing body. In addition, the total amount of the carbon black and the white filler is preferably more than 40 parts by mass, more preferably 45 parts by mass or more, and still more preferably 55 parts by mass or more per 100 parts by mass of the rubber component described above. The upper limit is more preferably 80 parts by mass or less, still more preferably 75 parts by mass or less, and still more preferably 70 parts by mass or less per 100 parts by mass of the rubber component described above. When the total amount of the carbon black and the white filler is less than 40 parts by mass or more than 85 parts by mass per 100 parts by mass of the rubber component described above, the effect of the present invention may not be obtained. Furthermore, when the total amount of the carbon black and the white filler is more than 85 parts by mass per 100 parts by mass of the rubber component described above, there is a possibility that the insertability of the functional component into the housing body is deteriorated.

The content of the white filler (content of the white filler itself) is not limited, and is preferably from 3 to 40 parts by mass per 100 parts by mass of the rubber component included in the housing body. The lower limit is more preferably 10 parts by mass or more per 100 parts by mass of the rubber component described above, and the upper limit is more preferably 30 parts by mass or less, and still more preferably 20 parts by mass or less per 100 parts by mass of the rubber component described above. However, the housing body provided in the tire of the present invention may be configured to be substantially free of the white filler.

### Other Components

The housing body provided in the tire of the present invention may further contain components other than the above-described rubber component, carbon black, and white filler as optional components as long as the effects of the present invention are not significantly affected. For example, appropriate amounts of various additives generally used in rubber products, such as resin components (terpene resin, coumarone resin, indene resin, rosin resin, and the like), zinc oxide (zinc white), oils (aromatic oil and the like), stearic acid, wax, lecithin, antioxidants, plasticizers, vulcanizing agents, vulcanization accelerators, and vulcanization accelerator assistants, can be contained. Although sulfur is exemplified as a representative vulcanizing agent, a compound having a cross-linking function between polymers such as peroxide may be used as a component other than sulfur. These may be used in combination.

For example, the contents of the oil, stearic acid, zinc oxide, and the resin component in the housing body are each preferably from 0.5 to 10 parts by mass and preferably from 1.0 to 8.0 parts by mass per 100 parts by mass of the rubber component included in the housing body. The content of sulfur in the housing body is preferably from 0.5 to 5.0 parts by mass per 100 parts by mass of the rubber component included in the housing body. In addition, the content of the vulcanization accelerator in the housing body is preferably from 0.3 to 3.0 parts by mass, and more preferably from 0.5 to 2.0 parts by mass, either as a primary accelerator alone or as a blend with a secondary accelerator, per 100 parts by mass of the rubber component included in the housing body.

The housing body provided in the tire of the present invention may further contain a silane coupling agent in order to further improve dispersibility of silica in a case where silica is used as the white filler. The silane coupling agent is not particularly limited as long as the silane coupling agent is a silane compound having a hydrolyzable group and an organic functional group. The hydrolyzable group is also not limited, and examples thereof include an alkoxy group, a phenoxy group, a carboxy group, and an alkenyloxy group, and the alkoxy group is more preferably an alkoxysilyl group bonded to a silicon atom. When the hydrolyzable group is an alkoxysilyl group, the number of carbon atoms of the alkoxysilyl group is preferably from 1 to 16, and more preferably from 1 to 4. Examples of the alkoxy group having from 1 to 4 carbons include a methoxy group, ethoxy group, and propoxy group.

The organic functional group is not particularly limited, and may be a group that can form a chemical bond with an organic compound, and examples thereof include an epoxy group, a vinyl group, an acryloyl group, a methacrylic group, an amino group, a sulfide group (particularly, a polysulfide group (-Sₙ-: n is an integer of 2 or more)), a mercapto group, and a block mercapto group (protecting mercapto group) (for example, octanoylthio groups). Among these, a sulfide group (particularly, a disulfide group or a tetrasulfide group), a mercapto group, and a block mercapto group are preferable.

One type of such a silane coupling agent may be used alone, or two or more types of the silane coupling agents may be used in a combination. The silane coupling agent is preferably a sulfur-containing silane coupling agent.

When silica is used as the white filler described above, the silane coupling agent is preferably contained in an amount of from 1 to 20 parts by mass, and more preferably contained in an amount of from 2 to 10 parts by mass per 100 parts by mass of the silica.

### Tensile Stress at 100% Elongation at 100°C (M100)

The housing body provided in the tire of the present invention has the configuration as described above, and it is more preferable that the tensile stress at 100% elongation (M100) of the housing body at 100°C is 5.0 MPa or less. This is because the housing body and the like tends to have sufficient durability to withstand forces, impacts, and the like due to rotation during tire running.

The M100 is more preferably 4.5 MPa or less, still more preferably 4.0 MPa or less, still more preferably 3.5 MPa or less, and still more preferably 3.0 MPa or less. The lower limit is more preferably 0.8 MPa or more, still more preferably 1.0 MPa or more, and still more preferably 1.3 MPa or more from the viewpoint of more easily suppressing falling off of the functional component.

Here, the M100 is a value confirmed by a method in which a predetermined rubber test piece (for example, dumbbell-shaped No. 7) is collected from the housing body, a tensile test is performed on the rubber test piece at a tensile speed of 500 mm/min in accordance with JIS K6251:2017, and the tensile stress at 100% elongation (MPa: M100) is measured at 100°C.

By adjusting the ratio and the like of each component in the configuration as described above, the M100 can be set within the above-described range.

### Functional Component

The functional component housed in the housing body of the tire of the present invention is not limited as long as it has the sensor function of detecting the tire information and has a shape capable of having the contact surface that contacts the tire inner surface of the tread portion. For example, electronic components including various sensors, a transmitter, a receiver, a control circuit, a battery, and the like are exemplified. Examples of the tire information detected and acquired by the sensor function include an internal temperature and an internal pressure (air pressure) of a pneumatic tire and an amount of wear of the tread portion. A temperature sensor and a pressure sensor can be used to measure the internal temperature and the internal pressure. For detecting the wear amount of the tread portion, a functional component in which a sensor element using a piezoelectric element is disposed on the contact surface, and the sensor element detects an output voltage according to tire deformation during travel, and detects the wear amount of the tread portion based on the output voltage is exemplified as being preferable. That is, it is more preferable that the sensor function of the functional component is a sensor function using the piezoelectric element as the sensor element from the viewpoint of detecting the wear amount of the tread portion. In addition, an acceleration sensor or a magnetic sensor can also be used.

### Tire

For example, as illustrated in FIG. 1, the tire of the present invention includes a tread portion 1 having an annular shape extending in a tire circumferential direction, a pair of sidewall portions 2, 2 arranged on both sides (both end sides in the tire width direction) of the tread portion 1, and a pair of bead portions 3, 3 arranged on an inner side of the pair of the sidewall portions 2 in a tire radial direction.

In this embodiment, at least one carcass layer 4 is mounted between the pair of bead portions 3, 3. The carcass layer 4 includes a plurality of reinforcing cords extending in the tire radial direction and is folded back around a bead core 5 disposed in each of the bead portions 3 from a tire inner side to a tire outer side. A bead filler 6 having a triangular cross-sectional shape and composed of a rubber composition is disposed on the outer circumference of the bead core 5.

On the other hand, one or more (preferably, a plurality of) belt layers 7 are arranged on an outer peripheral side of the carcass layer 4 in the tread portion 1. These belt layers 7 include a plurality of reinforcing cords (reinforcing cords are embedded) inclined in substantially the same direction with respect to the tire circumferential direction, and when the plurality of (for example, two) belt layers 7 are included, the reinforcing cords are arranged so as to cross each other between these layers. In the belt layer 7, an inclination angle of the reinforcing cord with respect to the tire circumferential direction is set, for example, in a range of from 10° to 60° at a smaller angle. Steel cords are preferably used as the reinforcing cords of the belt layers 7. To improve high-speed durability, at least one belt cover layer 8 formed by arranging the reinforcing cords at an angle of, for example, 5° or less with respect to the tire circumferential direction may be disposed on an outer circumferential side of the belt layers 7. Organic fiber cords such as nylon and aramid are preferably used as the reinforcing cords of the belt cover layer 8.

In addition, a tread rubber layer 15 is disposed on the tread portion 1. The tread rubber layer 15 includes at least a cap tread rubber layer 15A. In this embodiment, the tread rubber layer includes two layers including the cap tread rubber layer 15A forming the tread surface of the tread portion 1 and an undertread rubber layer 15B located on the inner side of the cap tread rubber layer 15A in the tire radial direction. The tread rubber layer 15 may include an earthing tread formed of conductive rubber exposed to a tire ground contact surface, and wing tips arranged at both ends in the tire width direction of the cap tread rubber layer 15A.

The constituent components of the tire of the present invention (components constituting each member such as the tread portion and each layer such as the belt layer) are not particularly limited, and known components included in the tire such as the rubber component can be arbitrarily used.

The tire size and the application of the tire are not particularly limited, and various tires such as tires for passenger cars, trucks and buses, and off-road tires can be provided.

In the tire of the present invention, the housing body having the configuration as described above is provided on the tire inner surface of the tread portion of the tire according to such an embodiment. The arrangement position of the housing body is not particularly limited as long as it is located on the tire inner surface of the tread portion, and may be a position that does not pass through the center point in the tire width direction on the tire inner surface of the tread portion.

The tire of the present invention is preferably a pneumatic tire. The gas to be filled in the pneumatic tire can be, for example, air, inert gas such as nitrogen, argon, helium, and other gases.

In the tire (tire with functional component) of the present invention having the configuration as described above, sensing intensity of the sensor function of the functional component provided on the tire inner surface of the tread portion is excellent, and the durability of the housing body that houses the functional component is also excellent. That is, even if repeated deformation and the like occur in the housing body due to, for example, rotation during tire running, deformation of the tread portion, or an impact, damage to the housing body (such as cracking or separation of members) is less likely to occur.

Hereinafter, Examples of the present invention will be described, but the present invention is not limited to the following examples, and various modifications can be made within the technical concept of the present invention.

### Examples

### Preparation and Evaluation of Tire with Functional Component

The housing bodies having the compositions shown in the following Table 1 and shapes as shown in FIGS. 2 to 3 were prepared, and bonded and fixed to the tire having a tire size of 235/55R17 96 V with an adhesive on the tire inner surface of the tread portion thereof as shown in FIG. 1, and the functional component using a piezoelectric element as the sensor element was mounted on the housing body such that the piezoelectric element was disposed on the contact surface that contacts the tire inner surface, thereby preparing a tire with various functional components.

Then, for the obtained tires with a functional component according to Reference Example 1, Comparative Examples 1 to 6, and Examples 1 to 5, the rubber hardness (HS) and the tensile stress at 100% elongation (M100) of the housing body were measured, and the sensing intensity of the functional component, the falling off property (difficulty in falling off), the insertability, and the durability of the housing body were evaluated as follows.

### Rubber Hardness (HS)

A dumbbell-shaped No. 7 type (thickness: 1.0 ± 0.1 mm) rubber test piece was collected from the housing portion in the obtained housing body of each tire with a functional component, and the rubber hardness (HS) of the rubber test piece was measured at a temperature of 20°C by a durometer type A (available from Toyo Seiki Seisaku-sho, Ltd.) in accordance with JIS K6253-3:2012.

The results are shown in the middle part of the following Table 1.

### Tensile Stress at 100% Elongation (M100)

A dumbbell-shaped No. 7 type (thickness: 1.0 ± 0.1 mm) rubber test piece was collected from the housing portion in the obtained housing body of each tire with a functional component, and the rubber test piece was subjected to a tensile test at a tensile speed of 500 mm/min in accordance with JIS K6251:2017, and the tensile stress at 100% elongation (MPa: M100) was measured at 20°C and 100°C.

These results are shown in the middle part of the following Table 1.

### Sensing Intensity

The obtained each tire with a functional component was assembled to a wheel, the air pressure was set to 230 kPa, the tire was run on a drum at a speed of 30 km/h by a drum tester, and a peak height of a waveform detected by the sensor element of the functional component was measured.

The results are shown in the lower part of the following Table 1. The results were expressed by an index with the value of Reference Example 1 as 100.

### Falling off Property of Functional Component

The obtained each tire with a functional component was assembled to a wheel, the air pressure was set to 360 kPa, and the tire was run on a drum by a drum tester, accelerated to a speed of 260 km/h in the first 10 minutes, and then accelerated by 10 km/h every 10 minutes. The speed at which the functional component fell off from the housing body was taken as a test result.

The results are shown in the lower part of the following Table 1. The results were expressed by an index with the value of Reference Example 1 as 100.

### Insertability

Whether or not the same functional component could be inserted into each housing body bonded and fixed to the tire inner surface at one time was evaluated by ○ or ×.

The results are shown in the lower part of the following Table 1.

### Durability of Housing Body

For the obtained each tire with a functional component, oxygen of 350 kPa was sealed as pretreatment, the tire was stored at 80°C for 5 days, assembled to a wheel, and subjected to an indoor running test in which the tire was run on a drum to 150 km/h under a condition of increasing by 10 km/h every 2 hours from 81 km/h as the running condition by a drum tester. The case where the housing body was broken was evaluated as ×, and the case where the housing body was not broken was evaluated as ○. The destruction of the housing body was defined as a state in which the sensor function of the functional component could not be exhibited due to cracking or detachment of the housing portion of the housing body.

The results are shown in the lower part of the following Table 1.

**[Table 1]**

| | **Standard Example 1** | **Comparative example 1** | **Comparative example 2** | **Comparative example 3** | **Example 1** | **Example 2** | **Example 3** | **Example 4** | **Comparative example 4** | **Comparative example 5** | **Comparative example 6** | **Example 5** |
|---|---|---|---|---|---|---|---|---|---|---|---|---|
| **NR** | **50** | **60** | **35** | **35** | **35** | **35** | **5** | **35** | **35** | **35** | **35** | **35** |
| **IIR** | **50** | **40** | **65** | **65** | **65** | **65** | **95** | **65** | **65** | **65** | **65** | **65** |
| **CB 1** | **40** | **40** | **35** | **85** | **42** | **80** | **60** | | **35** | **-** | **87** | **82** |
| **CB 2** | **-** | **-** | **-** | **-** | **-** | **-** | **-** | **40** | **-** | **-** | **-** | **-** |
| **Zinc oxide** | **2.5** | **2.5** | **2.5** | **2.5** | **2.5** | **2.5** | **2.5** | **2.5** | **2.5** | **2.5** | **2.5** | **2.5** |
| **Stearic acid** | **1** | **1** | **1** | **1** | **1** | **1** | **1** | **1** | **1** | **1** | **1** | **1** |
| **Resin** | **6.84** | **6.84** | **6.84** | **6.84** | **6.84** | **6.84** | **6.84** | **6.84** | **6.84** | **6.84** | **6.84** | **6.84** |
| **Aroma oil** | **5** | **5** | **5** | **5** | **5** | **5** | **5** | **5** | **5** | **5** | **5** | **5** |
| **Sulfur** | **0.8** | **0.8** | **0.8** | **0.8** | **0.8** | **0.8** | **0.8** | **0.8** | **0.8** | **0.8** | **0.8** | **0.8** |
| **Vulcanization accelerator** | **1** | **1** | **1** | **1** | **1** | **1** | **1** | **1** | **1** | **1** | **1** | **1** |
| **Silica 1** | **-** | **-** | **-** | **-** | **-** | **-** | **-** | **-** | **1** | **90** | **3** | **3** |
| **HS 20°C** | **44** | **43** | **42** | **68** | **46** | **64** | **57** | **52** | **42** | **79** | **68** | **66** |
| **M100 (@ 20°C, MPa)** | **0.9** | **0.8** | **0.8** | **2.8** | **1.0** | **2.4** | **1.4** | **1.5** | **0.8** | **1.8** | **3.0** | **2.7** |
| **M100 (@ 100°C, MPa)** | **2.3** | **2.3** | **2.3** | **5.2** | **2.3** | **4.9** | **2.9** | **3.2** | **2.3** | **2.0** | **5.5** | **4.9** |
| **Sensing intensity (index)** | **100** | **95** | **95** | **120** | **105** | **115** | **110** | **110** | **95** | **120** | **116** | **115** |
| **Functional component falling off property (index)** | **100** | **95** | **95** | **120** | **105** | **115** | **110** | **110** | **95** | **120** | **116** | **115** |
| **Functional component insertability** | **○** | **○** | **○** | **×** | **○** | **○** | **○** | **○** | **○** | **×** | **×** | **○** |
| **Housing body durability** | **○** | **○** | **○** | **×** | **○** | **○** | **○** | **○** | **○** | **○** | **×** | **○** |

The detailed contents of each component and the like in Table 1 are as follows.
· NR: Natural rubber (SIR20, available from PT. PANTJA SURYA)
· IIR: Butyl rubber (EXXON Bromobutyl 2255, available from ExxonMobil chemical company)
· CB1: Carbon black (GPF, nitrogen adsorption specific surface area (N₂SA): 35 m²/g, Niteron #GN: available from NSCC Carbon Co., Ltd.)
· CB2: Carbon black (HAF, nitrogen adsorption specific surface area (N₂SA): 93 m²/g, Seast KH: available from Tokai Carbon Co., Ltd.)
· Zinc oxide: Ginrei R (available from TOHO ZINC CO., LTD.)
· Stearic acid: Beads Stearic Acid Kiri (available from Chiba Fatty Acid Co., Ltd.)
· Resin (resin component): C5 resin (Homogenizing Agent H40MSF, available from Shandong Yanggu Huatai Chemical Co, Ltd.)
· Aroma oil: Aroma oil (Diana Process NH-70S, available from Idemitsu Kosan Co., Ltd.)
· Sulfur: SULFAX 5 (available from Tsurumi Chemical Industry Co., Ltd.)
· Vulcanization accelerator: Noccela DM-PO (available from Ouchi Shinko Chemical Industry Co., Ltd.)
· Silica 1: Silica (ULTRASIL VN3GR, CTAB specific surface area: 170 m²/g: available from Evonik)

From these results, it was shown that when the housing body including the rubber component containing 65 mass% or more of IIR and having a content ratio of NR of 35 mass% or less had a configuration containing a predetermined amount of carbon black, the sensing intensity, falling off property and insertability of the functional component were all improved, and the durability of the housing body was also improved (Examples 1 to 5). On the other hand, it was also shown that when the ratio of butyl rubber or the content of carbon black in the rubber component was low, the sensing intensity and falling off property of the functional component were deteriorated (Comparative Examples 1, 2, and 4), and when the content of carbon black was high, the insertability of the functional component and the durability of the housing body were deteriorated (Comparative Examples 3 and 6). When silica was used as a substitute for carbon black, the insertability of the functional component was deteriorated (Comparative Example 5).

In addition, in the same manner as described above, the housing bodies having the compositions shown in the following Table 2 and shapes as shown in FIGS. 2 to 3 were prepared, and bonded and fixed to the tire having a tire size of 235/55R17 96 V on the tire inner surface of the tread portion thereof as shown in FIG. 1, and the same functional component using a piezoelectric element as the sensor element was mounted on the housing body, thereby preparing a tire with various functional components.

For the obtained tires with a functional component according to Reference Example 2, Comparative Example 7, and Examples 9 to 18, the measurement of the tensile stress at 100% elongation (M100) of the housing body at 100°C and the evaluation of the sensing intensity of the functional component were performed in the same manner as described above. In addition, in the durability of the housing body, in the same indoor running test as described above, the test was performed under a condition of increasing by 10 km/h every 2 hours from 81 km/h as the running condition, and the speed when the housing body was broken was taken as the test result.

The results are shown in the middle part and the lower part of the following Table 2. Both the results of the sensing intensity of the functional component and the durability of the housing body were represented by an index with the value of Reference Example 2 as 100.

**[Table 2]**

| | **Standard Example 2** | **Comparative example 7** | **Example 9** | **Example 10** | **Example 11** | **Example 12** | **Example 13** | **Example 14** | **Example 15** | **Example 16** | **Example 17** | **Example 18** |
|---|---|---|---|---|---|---|---|---|---|---|---|---|
| **NR** | **50** | **30** | **30** | **30** | **30** | **30** | **30** | **30** | **30** | **-** | **-** | **30** |
| **IIR** | **50** | **70** | **70** | **70** | **70** | **70** | **70** | **70** | **70** | **100** | **100** | **70** |
| **CB 1** | **60** | **25** | **-** | **-** | **-** | **-** | **-** | **45** | **-** | **45** | **45** | **-** |
| **CB 2** | **-** | **-** | **-** | **-** | **-** | **-** | **-** | **-** | **45** | **-** | **-** | **-** |
| **CB 3** | **-** | **-** | **45** | **45** | **45** | **45** | **45** | **-** | **-** | **-** | **-** | **65** |
| **Silica 1** | **-** | **2** | **15** | **-** | **-** | **-** | **-** | **15** | **15** | **15** | **15** | **15** |
| **Silica 2** | **-** | **-** | **-** | **15** | **-** | **-** | **-** | **-** | **-** | **-** | **-** | **-** |
| **Clay** | **-** | **-** | **-** | **-** | **15** | **-** | **-** | **-** | **-** | **-** | **-** | **-** |
| **Calcium carbonate** | **-** | **-** | **-** | **-** | **-** | **15** | **-** | **-** | **-** | **-** | **-** | **-** |
| **Talc** | **-** | **-** | **-** | **-** | **-** | **-** | **15** | **-** | **-** | **-** | **-** | **-** |
| **Silane coupling agent** | **-** | **-** | **-** | **-** | **-** | **-** | **-** | **-** | **-** | **-** | **1.2** | **-** |
| **Aroma oil** | **5** | **5** | **5** | **5** | **5** | **5** | **5** | **5** | **5** | **5** | **5** | **5** |
| **Resin** | **5** | **5** | **5** | **5** | **5** | **5** | **5** | **5** | **5** | **5** | **5** | **5** |
| **Zinc oxide** | **3** | **3** | **3** | **3** | **3** | **3** | **3** | **3** | **3** | **3** | **3** | **3** |
| **Stearic acid** | **1.5** | **1.5** | **1.5** | **1.5** | **1.5** | **1.5** | **1.5** | **1.5** | **1.5** | **1.5** | **1.5** | **1.5** |
| **Sulfur** | **1.0** | **1.0** | **1.0** | **1.0** | **1.0** | **1.0** | **1.0** | **1.0** | **1.0** | **1.0** | **1.0** | **3.5** |
| **Vulcanization accelerator** | **1.0** | **1.0** | **1.0** | **1.0** | **1.0** | **1.0** | **1.0** | **1.0** | **1.0** | **1.0** | **1.0** | **1.0** |
| **M100 (@ 100°C, MPa)** | **2.0** | **1.0** | **2.3** | **1.9** | **1.7** | **1.5** | **1.4** | **2.0** | **2.3** | **1.9** | **2.0** | **5.5** |
| **Sensing intensity (index)** | **100** | **84** | **115** | **106** | **105** | **103** | **105** | **108** | **117** | **106** | **110** | **140** |
| **Housing body durability (index)** | **100** | **115** | **110** | **111** | **110** | **113** | **110** | **107** | **125** | **108** | **110** | **104** |

In the detailed contents of each component and the like in Table 2 above, the components overlapping with Table 1 are the same as those in Table 1, and the components not described in Table 1 are as follows.
· CB3: Carbon black (FEF, nitrogen adsorption specific surface area (N₂SA): 42 m²/g, Seast SO: available from Tokai Carbon Co., Ltd.)
· Silica 2: Silica (ULTRASIL 115GR, CTAB specific surface area: 114 m²/g: available from Evonik)
· Clay: T clay (available from Saitama Mineral Co., Ltd.)
· Calcium carbonate: heavy calcium carbonate (available from Maruo Calcium Co., Ltd.)
· Talc: MH (available from Nippon Talc Co., Ltd.)
· Silane coupling agent: Si69 (available from Evonik)

From these results, it was shown that a similar effect was exhibited even when a predetermined amount of silica, clay, calcium carbonate, or talc was used as a white filler together with carbon black in the housing body including the rubber component containing 70 mass% or more of IIR and having a content ratio of NR of 30 mass% or less (Examples 9 to 18). On the other hand, when the carbon black content and the total amount of carbon black and silica were low, the sensing intensity of the functional component decreased (Comparative Example 7).

This application is based upon and claims the benefit of priority from Japanese patent application No. 2023/196858, filed on November 20, 2023, the disclosure of which is incorporated herein in its entirety by reference.

### Reference Signs List

100 Tire
1 Tread portion
2 Sidewall portion
3 Bead portion
4 Carcass layer
5 Bead core
6 Bead filler
7 Belt layer
8 Belt cover layer
11 Tire circumferential groove
12 Tire inner surface of tread portion
20 Functional component
21 Contact surface (piezoelectric element)
30 Housing body
31 Base portion
32 Side wall
33 Housing portion

## Claims

1. A tire, comprising
a housing body provided on a tire inner surface of a tread portion and housing a functional component,
the functional component having at least a contact surface that contacts the tire inner surface and a sensor function of detecting tire information,
the housing body being composed of a rubber component,
the rubber component containing 60 mass% or more of butyl rubber (IIR), having a content ratio of natural rubber (NR) of 40 mass% or less, and further containing 40 to 82 parts by mass of carbon black per 100 parts by mass of the rubber component.

2. The tire according to claim 1, wherein the housing body contains a total of 40 to 85 parts by mass of the carbon black and a white filler per 100 parts by mass of the rubber component.

3. The tire according to claim 2, wherein the white filler is one or more selected from the group consisting of silica, talc, mica, clay, and calcium carbonate.

4. The tire according to any one of claims 1 to 3, wherein an average value of a nitrogen adsorption specific surface area (N₂SA) of the carbon black is 50 m²/g or less.

5. The tire according to any one of claims 1 to 3, wherein a tensile stress at 100% elongation (M100) of the housing body at 100°C is 5.0 MPa or less.

6. The tire according to any one of claims 1 to 3, wherein the housing body is fixed to the tire inner surface.

7. The tire according to claim 6, wherein the housing body is fixed to the tire inner surface with an adhesive.

8. The tire according to any one of claims 1 to 3, wherein the sensor function of the functional component is a sensor function using a piezoelectric element as a sensor element.
